# EUROPEAN PATENT SPECIFICATION

(11) **EP 2 896 802 B1**
(45) Date of publication and mention of the grant of the patent: **10.05.2017**
(21) Application number: 13828512.7
(22) Date of filing: 09.08.2013
(51) Int. Cl.: F01N 5/02, F01N 13/08, F28D 21/00

(54) **EXHAUST HEAT RECOVERY DEVICE**
VORRICHTUNG ZUR RÜCKGEWINNUNG VON ABGASWÄRME
DISPOSITIF DE RÉCUPÉRATION DE CHALEUR D'ÉCHAPPEMENT

(30) Priority: 10.08.2012 JP 2012178422
(43) Date of publication of application: 22.07.2015
(73) Proprietor: Futaba Industrial Co. Ltd., Okazaki-shi, Aichi 444-8558 (JP)
(72) Inventor: KATO, Hisayuki, Okazaki-shi, Aichi 444-8558 (JP); OKAMI, Hirohisa, Okazaki-shi, Aichi 444-8558 (JP)
(74) Representative: Otten, Roth, Dobler & Partner mbB Patentanwälte
(86) International application number: PCT/JP2013/071705
(87) International publication number: WO 2014/025036

(56) References cited:
- JP-A- 2006 250 524
- JP-A- 2009 114 995
- JP-A- 2009 144 606
- JP-A- 2011 214 537
- JP-A- 2011 214 537
- JP-A- 2012 057 573
- US-A1- 2005 133 202

## Description

### TECHNICAL FIELD

The present invention relates to an exhaust heat recovery device, which is applied to, for example, an exhaust system, etc. of an internal combustion engine.

### BACKGROUND ART

Conventionally, an exhaust heat recovery device is known, which performs heat exchange between exhaust gas of an internal combustion engine and a heat exchange medium, such as cooling water, so as to recover the exhaust heat. The exhaust heat recovery device is provided with a diversion valve at an outlet of an exhaust pipe, which is capable of opening and closing the outlet. Also, the exhaust heat recovery device is provided with a heat exchange path that extends from a branch port provided inside of the exhaust pipe through a heat exchanger part, to an exhaust port provided outside of the exhaust pipe (see, Patent Document 1 below).

In this exhaust heat recovery device, when the diversion valve of the exhaust pipe is closed, exhaust gas mainly passes through the aforementioned heat exchange path where heat exchange is performed. On the other hand, if the heat exchange is not necessary, the diversion valve of the exhaust pipe is open. In this case, exhaust gas mainly flows through the exhaust pipe with a lower resistance than a resistance of the aforementioned heat exchange path, and an amount of the exhaust gas flowing through the heat exchange path decreases; therefore, the heat exchange can be inhibited.

### PRIOR ART DOCUMENTS

### PATENT DOCUMENTS

Patent Document 1: Japanese Unexamined Patent Application Publication No. 2009-114995.
Further, US 2005/0133202 A1 discloses an exhaust heat exchanger using a bypass of a main exhaust flow for heating a second fluid which is guided through a pipe disposed in the bypass stream of the exhaust. A similar exhaust heat recovery device is known from the JP 2011-214537 A.

### SUMMARY OF THE INVENTION

### PROBLEMS TO BE SOLVED BY THE INVENTION

In the conventional exhaust heat recovery device, however, even when the diversion valve of the exhaust pipe is open, part of the exhaust gas flows in the heat exchange path, and heat exchange is performed. This is because the exhaust gas flowing through the exhaust pipe produces a Venturi effect, thereby drawing the exhaust gas from the exhaust port, and, consequently, flow of the exhaust gas in the heat exchange path is generated. This causes heat exchange even when heat exchange is not necessary, which may adversely affect vehicle cooling performance. It is desired that one aspect of the present invention provide an exhaust heat recovery device capable of reducing unnecessary heat exchange.

### MEANS FOR SOLVING THE PROBLEMS

The problems are solved by claim 1. And an advantageous embodiment is claimed in claim 2.

An exhaust heat recovery device in one aspect of the present invention includes: an exhaust pipe that guides exhaust gas from an upstream side to a downstream side; a branch port for the exhaust gas, provided inside of the exhaust pipe; a heat exchange part that performs heat exchange between the exhaust gas branched from the branch port and a heat exchange medium; an exhaust port that discharges the exhaust gas, which has passed through the heat exchange part, to outside of the exhaust pipe; an opening and closing unit that opens and closes an outlet of the exhaust pipe; and a shell member that guides
the exhaust gas discharged from the outlet and the exhaust port, to the downstream side. The shell member includes an intersecting plane intersecting a virtual ray that extends from an end part of the outlet on a side of the exhaust port, the end part serving as a starting point, and the virtual ray being inclined outwardly at an angle of 7° with respect to an axial direction of the exhaust pipe, and the intersecting plane forms an angle of 90° to 97° with respect to the virtual ray; the exhaust port is positioned between the outlet and the intersecting plane in the axial direction.

In the exhaust heat recovery device configured as above, when the outlet of the exhaust pipe is open by the opening and closing unit (for example, diversion valve), an amount of the exhaust gas flowing in the heat exchange part can be further reduced. The reason can be assumed as below.

The exhaust gas discharged from the outlet of the exhaust pipe spreads outwardly at an angle of 7° with respect to the axial direction of the exhaust pipe. In the above-described exhaust heat recovery device, the shell member comprises the intersecting plane intersecting the virtual ray that extends from an end part of the outlet on a side of the exhaust port, the end part serving as the starting point, and the virtual ray being inclined outwardly at the angle of 7° with respect to the axial direction of the exhaust pipe, and the intersecting plane forms the angle of 90° to 97° with respect to the virtual ray. Thus, at least part of the exhaust gas discharged from the outlet of the exhaust pipe hits the intersecting plane and generates a swirl of the exhaust gas.

Moreover, the exhaust port is positioned between the outlet and the intersecting plane in the axial direction of the exhaust pipe and therefore, the exhaust port is covered with the aforementioned swirl. For this reason, a phenomenon of drawing exhaust gas from the exhaust port by the flow of the exhaust gas in the exhaust pipe is less likely to occur. Consequently, an amount of the exhaust gas flowing in a flow path from the branch port through the heat exchange part to the exhaust port is further reduced. This further inhibits unnecessary heat exchange.

The above-described exhaust heat recovery device may comprise, for example, a partition plate that is provided in the exhaust port and that forms a passage that guides the exhaust gas to the downstream side. In this case, an outlet of the passage formed by the partition plate is closer to the aforementioned swirl of the exhaust gas and therefore, the outlet is more likely to be covered with the swirl of the exhaust gas. Consequently, unnecessary heat exchange can be further inhibited.

### BRIEF DESCRIPTION OF THE DRAWINGS

FIG. 1 is a perspective view showing a configuration of an exhaust heat recovery device of a first embodiment.
FIG. 2 is a cross sectional view taken along a line II-II in FIG. 1.
FIG. 3 is a perspective view showing the configuration of the exhaust heat recovery device of the first embodiment, in which an outer shell is detached.
FIG. 4 is a perspective view showing a configuration of an exhaust heat recovery device of a second embodiment, in which an outer shell is detached.
FIG. 5 is a cross sectional view of the exhaust heat recovery device of the second embodiment.
FIG. 6 is a perspective view showing a configuration of an exhaust heat recovery device of a reference example.
FIG. 7 is a cross sectional view taken along a line VII-VII in FIG. 6.
FIG. 8 is a perspective view showing a configuration of the exhaust heat recovery device of the reference example, in which an outer shell is detached.

### EXPLANATION OF REFERENCE NUMERALS

1...exhaust heat recovery device, 3...inner pipe, 5...heart exchange part, 7...outlet part, 7b...end, 7c...outlet, 9...diversion valve, 17, 19, 20...clearance, 12...partition plate, 13...casing, 13a...outer circumferential plate, 13b...upstream-side lid, 13c...downstream-side lid, 15...cooling water pipe, 21...rotation shaft, 22, 29a...exhaust port, 23...valve body, 25...large-diameter section, 25a...wall, 27, 29...passage, 101...exhaust heat recovery device, B...axial direction, C...ray

### MODE FOR CARRYING OUT THE INVENTION

Embodiments of the present invention will be described with reference to the drawings.

### <First Embodiment>

### 1. Configuration of an exhaust heat recovery device 1

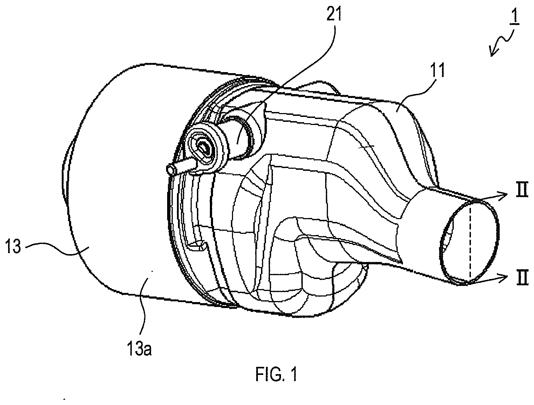

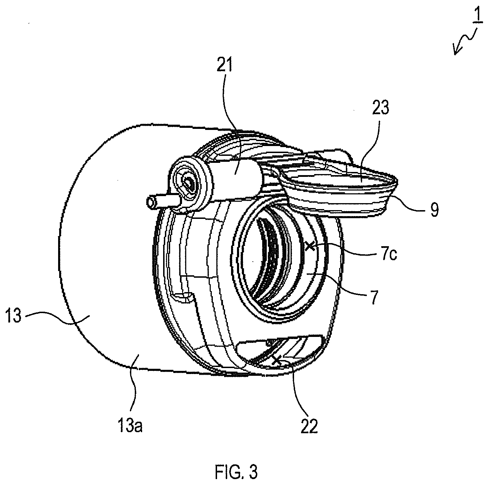

A configuration of the exhaust heat recovery device of the first embodiment will be explained with reference to FIG. 1 to FIG. 3. The exhaust heat recovery device 1 is provided with an inner pipe 3, a heat exchange part 5, an outlet part 7, a diversion valve 9, and an outer shell 11.

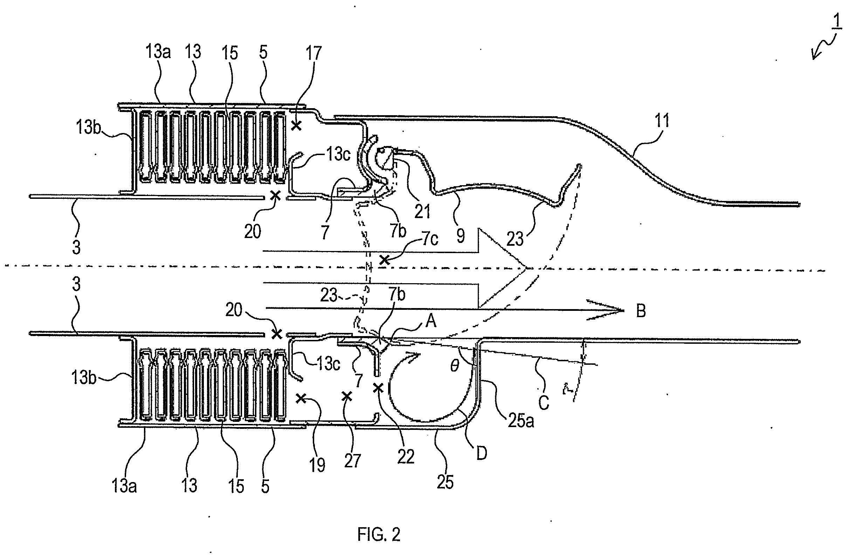

The inner pipe 3 is a hollow cylindrical member having openings on an upstream side (left side in FIG. 2) and a downstream side (right side in FIG. 2). The inner pipe 3 makes exhaust gas discharged from a not-shown internal combustion engine flow thereinside, thereby guiding the exhaust gas from the upstream side to the downstream side. A branch port 20 is provided in a portion of the inner pipe 3 facing to a heat exchange part 5. The exhaust gas flowing inside the inner pipe 3 can flow into an inner circumference side of the heat exchange part 5 from the branch port 20.

The heat exchange part 5 is an annular member, which is attached around the outside of the inner pipe 3. The heat exchange part 5 comprises a hollow casing 13, and a cooling water pipe 15 wound spirally and housed inside of the casing 13. The casing 13 comprises an outer circumferential plate 13a, an upstream-side lid 13b, and a downstream-side lid 13c. The outer circumferential plate 13a is a plate-like member that encircles an outer circumference of the inner pipe 3. The upstream-side lid 13b and the downstream-side lid 13c are members that occludes between the outer circumferential plate 13a and the inner pipe 3.

An upper-side part and a bottom-side part of the downstream-side lid 13c in FIG. 2 are partially cut out to provide clearances 17 and 19, respectively. Accordingly, an inside and an outside of the casing 13 communicate to each other via these clearances 17 and 19. The cooling water pipe 15 is one continuous pipe, and both ends of which lead to an outside of the casing 13 and connect to a not-shown cooling-water circulation system. Thus, cooling water that has flowed into the cooling water pipe 15 from the cooling-water circulation system flows through the cooling water pipe 15 inside the casing 13, and flows back to the cooling-water circulation system. As will be described later, a temperature of the cooling water that has flowed into the cooling water pipe 15 is increased by high-temperature exhaust gas introduced into the casing 13 (in other words, heat exchange is performed).

The outlet part 7 is an annular member having openings on the upstream side and the downstream side; the outlet part 7 is located on the downstream side of the inner pipe 3 and the heat exchange part 5. Although the outlet part 7 basically occludes between the inner pipe 3 and the outer circumferential plate 13a, a portion of the outlet part 7 on the bottom side in FIG. 2 is cut out to form an exhaust port 22. Consequently, a passage 27 is formed, which extends from the clearance 19 through the exhaust port 22 to an inside of the outer shell 11. A position of the exhaust port 22 in an axial direction B (an axial direction of the inner pipe 3) is the same as the position of a downstream-side end 7b of the outlet part 7. Moreover, the exhaust port 22 is located outside of the outlet part 7 and more specifically, the exhaust port 22 is located beneath a center of an outlet 7c.

When the diversion valve 9 is in an "occluding state", which will be described later, the downstream-side end 7b of the outlet part 7 comes in contact with a valve body 23, to thereby occlude a downstream-side opening part of the outlet part 7 (hereinafter, referred to as outlet 7c).

The diversion valve 9 is provided in the downstream-side end 7b of the outlet part 7. The diversion valve 9 comprises a rotation shaft 21 provided on an upper side in FIG. 2, and the valve body 23 that rotates around the rotation shaft 21 as a center of rotation. The diversion valve 9 can be switched between an open state where the outlet 7c is open as shown in the solid line in FIG. 2, and an occluding state where the outlet 7c is occluded as shown in the dotted line in FIG. 2.

The outer shell 11 is a thin-walled hollow member having openings on the upstream side and the downstream side. The upstream side of the outer shell 11 is in contact with an exterior of the outlet part 7, and the downstream side of the outer shell 11 is connected to a not-shown exhaust path. The outer shell 11 contains the outlet part 7 thereinside, and an inner diameter of the outer shell 11 is larger than an outer diameter of the outlet 7c of the outlet part 7. Accordingly, inside the outer shell 11, exhaust gas that has passed through the outlet 7c spreads out in the outer circumferential direction. The outer shell 11 comprises a large-diameter section 25 on a bottom side thereof in FIG. 2; the large-diameter section 25 has a larger diameter than a diameter on the downstream side of the outer shell 11. The large-diameter section 25 is provided with a wall 25a on a downstream side thereof, which extends in a direction intersecting with the axial direction B of the inner pipe 3.

The outlet 7c and the exhaust port 22 exist inside the outer shell 11. Accordingly, exhaust gases discharged from the outlet 7c and the exhaust port 22 are led to the downstream side along the outer shell 11.

When there is a virtual ray C that extends from a portion A, which serves as a starting point, on the bottom side (exhaust port 22 side) in FIG. 2 of the downstream-side end 7b in the outlet part 7 and the ray C is inclined outwardly at an angle of 7° with respect to the axial direction B of the inner pipe 3, the wall 25a intersects with the ray C. An angle θ formed between the ray C and the wall 25a is from 90° to 97°. Here, the angle θ is an angle formed below the ray C in FIG. 2.

With the aforementioned configuration, an exhaust gas flow path is formed, which extends from the inside of the inner pipe 3, through the branch port 20, the inside of the casing 13, the clearance 19, the passage 27, and the exhaust port 22 in sequence.

Here, the inner pipe 3 and the outlet part 7 are an example of an exhaust pipe in the present invention. The cooling water is an example of a heat exchange medium in the present invention. The diversion valve 9 is an example of an opening and closing unit in the present invention. The outer shell 11 is an example of a shell member in the present invention. The wall 25a is an example of an intersecting plane in the present invention.

### 2. Operation and effect of the exhaust heat recovery device 1

### (1) A state where the outlet 7c is occluded by the diversion valve 9

Exhaust gas that has been introduced into the inner pipe 3 is delivered through the branch port 20, the inside of the casing 13, the clearance 19, the passage 27, and the exhaust port 22 in sequence, to the inside of the outer shell 11. When the exhaust gas is passing through the inside of the casing 13, heat exchange is performed between water flowing in the cooling water pipe 15 and high-temperature exhaust gas.

### (2) A state where the outlet 7c is open by the diversion valve 9

Exhaust gas that has been introduced into the inner pipe 3 is delivered through the inner pipe 3 and the outlet part 7 in sequence, to the outer shell 11. As described above, the inner diameter of the outer shell 11 is larger than the outer diameter of the outlet 7c in the outlet part 7 and thus, the exhaust gas that has passed through the outlet 7c spreads out in the outer circumferential direction. An angle of this spread (an angle with respect to the axial direction B) is known to be 7° based on fluid dynamics.

The outer shell 11 comprises the wall 25a intersecting with the above-described ray C at the angle θ of 90° to 97° and therefore, at least part of the exhaust gas that has passed through the outlet part 7 hits the wall 25a and generates a swirl of the exhaust gas, as shown in an arrow D in FIG. 2, at the front side of the wall 25a inside the space of the large-diameter section 25. A part of the swirl of the exhaust gas flows in a direction from the wall 25a to a bottom-side wall in the large-diameter section 25.

Moreover, the position of the exhaust port 22 in the axial direction B is the same as the position of the outlet 7c and thus, the exhaust port 22 is more likely to be covered with the aforementioned swirl. Therefore, a phenomenon of drawing exhaust gas from the exhaust port 22 by the flow of the exhaust gas in the inner pipe 3 and the outlet part 7 is less likely to occur. As a result, an amount of the exhaust gas flowing in the flow path through the branch port 20, the inside of the casing 13, the clearance 19, the passage 27, and the exhaust port 22 in sequence is further reduced. This further inhibits unnecessary heat exchange.

### <Second Embodiment>

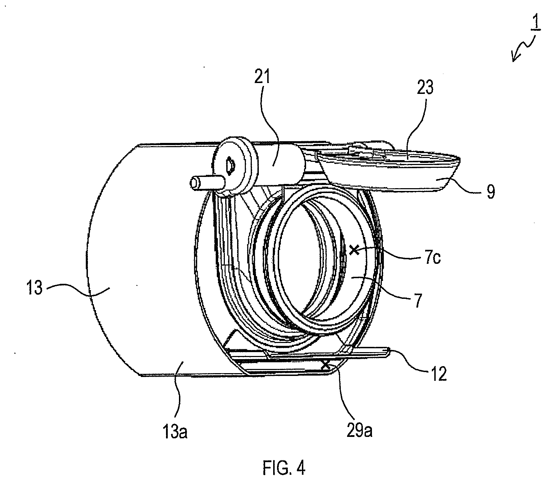

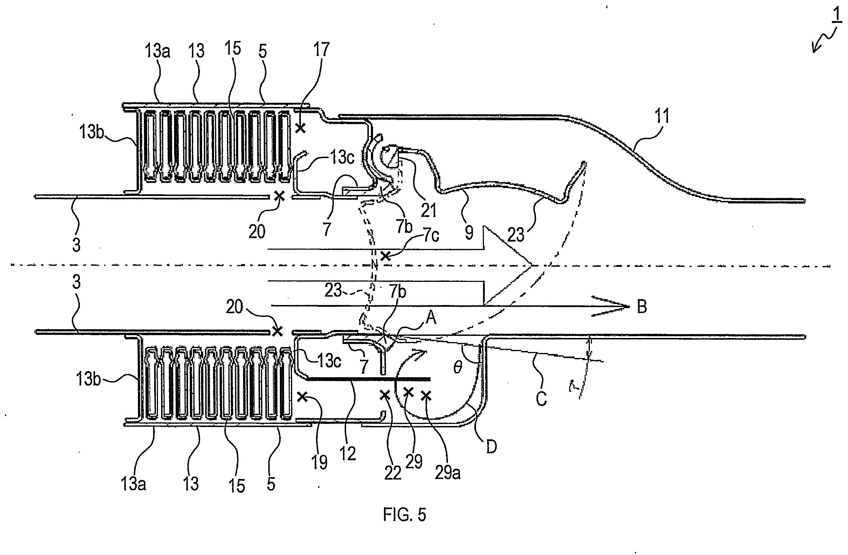

A configuration of an exhaust heat recovery device of the second embodiment will be described with reference to FIG. 4 and FIG. 5. The exhaust heat recovery device 1 of the present embodiment generally comprises the same configuration as that of the first embodiment, and additionally comprises a partition plate 12.

The partition plate 12 is a flat-plate member and is provided in a standing manner at a clearance 19-side end of the downstream-side lid 13c. A surface of the partition plate 12 is substantially parallel to the axial direction B of the inner pipe 3 and extends to a further downstream side from the exhaust port 22 in the axial direction B. The partition plate 12 reaches the outer shell 11 at both ends thereof in a width direction (a direction perpendicular to the sheet surface of FIG. 5). Therefore, a passage 29 is formed, which extends from the clearance 19, passes through between the partition plate 12 and the outer shell 11, and reaches the inside of the outer shell 11. A downstream-side exhaust port (hereinafter referred to as an exhaust port 29a) of the passage 29 in the axial direction B is positioned on a further downstream side from the downstream-side end 7b of the outlet part 7. Moreover, the exhaust port 29a is located outside of the outlet part 7 and more particularly, the exhaust port 29a is located beneath a center of the outlet 7c.

### 2. Operation and effect of the exhaust heat recovery device 1

### (1) A state where the outlet 7c is occluded by the diversion valve 9

Exhaust gas that has been introduced into the inner pipe 3 is delivered through the branch port 20, the inside of the casing 13, the clearance 19, the passage 29, and the exhaust port 29a in sequence, to the inside of the outer shell 11. When the exhaust gas is passing through the inside of the casing 13, heat exchange is performed between cooling water flowing in the cooling water pipe 15 and high-temperature exhaust gas.

### (2) A state where the outlet 7c is open by the diversion valve 9

As in the case of the first embodiment, at least part of the exhaust gas that has passed through the outlet part 7 hits the wall 25a and generates a swirl of the exhaust gas, as shown in an arrow D in FIG. 5, at the front side of the wall 25a inside the space of the large-diameter section 25. A part of the swirl of the exhaust gas flows in a direction from the wall 25a to a bottom-side wall in the large-diameter section 25.

Moreover, the position of the exhaust port 29a in the axial direction B is on the downstream side from the outlet 7c and thus, the exhaust port 29a is more likely to be covered with the aforementioned swirl. Therefore, a phenomenon of drawing exhaust gas from the exhaust port 29a by the flow of the exhaust gas in the inner pipe 3 and the outlet part 7 is less likely to occur. As a result, an amount of the exhaust gas flowing in the flow path through the branch port 20, the inside of the casing 13, the clearance 19, the passage 29, and the exhaust port 29a in sequence is further reduced. This further inhibits unnecessary heat exchange.

Furthermore, by adjusting a length (a length in the axial direction B) of the partition plate 12, the position of the exhaust port 29a in the axial direction B can be appropriately set within a range from the position of the outlet 7c to the position of the wall 25a.

### <Other embodiment>

In the above-described first embodiment, the position of the exhaust port 22 in the axial direction B can be appropriately set within a range from the position of the outlet 7c to the position of the wall 25a.

In each of the above-described embodiments, the inner pipe 3 and the outlet part 7 may be formed as an integral member. Each of the casing 13 and the outlet part 7 may be an integral member or a member combined with a plurality of parts. Instead of cooling water, a different heat exchange medium may be used. The heat exchange part 5 may be provided in parallel to the inner pipe 3, without being attached around the outside of the inner pipe 3. Instead of the diversion valve 9, a different opening and closing unit may be used. Such an opening and closing unit is, for example, an opening and closing unit provided with a slide-type valve, and the like. The wall 25a may have a flat shape or a curved shape.

In each of the above-described embodiments, it is described that the wall 25a serving as the intersecting plane is the wall 25a of the shell member 11. However, the shell member 11 may configured with a following wall provided as a separate component: this wall is provided on an inner circumference of the shell member 11, such that the wall forms an angle θ of 90° to 97° with respect to the ray C so as to function as the intersecting plane. This wall can provide the same operation and effect as those obtained by the wall 25a in each of the above-described embodiments.

Each of the above-described embodiments is merely one example; various omissions, replacements, and modifications can be made to these embodiments without departing from the main idea of the invention.

### <Reference Example>

### 1. Configuration of an exhaust heat recovery device 101

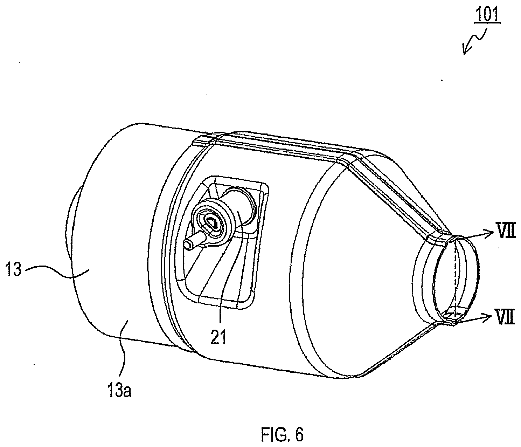

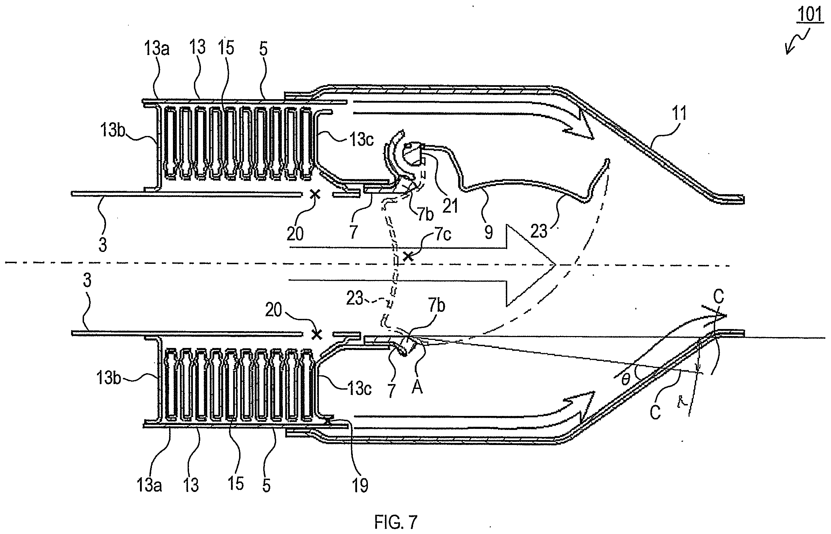

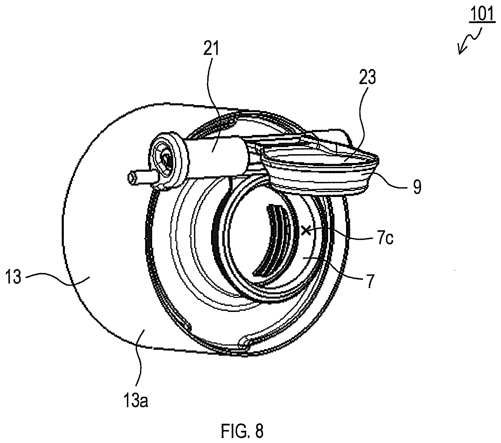

The configuration of the exhaust heat recovery device 101 will be described with reference to FIG. 6 to FIG. 8. The exhaust heat recovery device 101 has generally the same configuration as that in the above-described first embodiment. However, in the present reference example, the outer shell 11 has a different shape from that in the above-described first embodiment, and the outlet part 7 does not occlude between the inner pipe 3 and the outer circumferential plate 13a.

In the present reference example, the diameter of the outer shell 11 gradually changes from the upstream side to the downstream side. When there is the aforementioned virtual ray C, the angle θ formed between the ray C and the inner surface of the outer shell 11 is an angle smaller than 90°. Consequently, when the exhaust gas that has passed through the outlet part 7 hits the inner surface of the outer shell 11, a swirl of the exhaust gas, like the swirl in the aforementioned embodiments, is less likely to be generated.

Moreover, since the outlet part 7 has the above-described configuration, the clearance 19 is used as an exhaust port, through which exhaust gas inside the casing 13 is discharged into the outer shell 11. The clearance 19 is positioned on the upstream side from the outlet 7c in the axial direction B. Accordingly, if a swirl of exhaust gas is generated as in each of the above-described embodiments, the clearance 19 cannot be sufficiently covered with the swirl.

## Claims

1. An exhaust heat recovery device (1) comprising:
an exhaust pipe (3) that is configured to guide exhaust gas from an upstream side to a downstream side;
a branch port (20) for the exhaust gas, provided inside of the exhaust pipe (3);
a heat exchange part (15) that is configured to perform heat exchange between the exhaust gas branched from the branch port (20) and a heat exchange medium (15);
an exhaust port (22) that is configured to discharge the exhaust gas, which has passed through the heat exchange part (15), to outside of the exhaust pipe (3);
an opening and closing unit (9) that is configured to open and close an outlet (7c) of the exhaust pipe (3); and
a shell member (11) that is configured to guide the exhaust gas discharged from the outlet (7c) and the exhaust port (22), to the downstream side,
wherein the shell member (11) comprises an intersecting plane (25a) intersecting a virtual ray (C) that extends from an end part (A) of the outlet (7c) on a side of the exhaust port (22), the end part (A) serving as a starting point, and the virtual ray (C) being inclined outwardly at an angle of 7° with respect to an axial direction (B) of the exhaust pipe (3), and the intersecting plane (25a) forms an angle of 90° to 97° with respect to the virtual ray (C),
wherein the exhaust port (22) is positioned between the outlet (7c) and the intersecting plane (25a) in the axial direction (B), and
wherein the exhaust port (22) is located beneath a center of the outlet (7c).

2. The exhaust heat recovery device (1) according to Claim 1, further comprising a partition plate (12) provided in the exhaust port (22) and forming a passage (29) for guiding the exhaust gas to the downstream side.

## Patentansprüche

1. Abgasabwärmerückgewinnungsvorrichtung (1), umfassend:
ein Abgasrohr (3), das so ausgelegt ist, dass es Abgas von einer stromaufwärts gelegenen Seite zu einer stromabwärts gelegenen Seite führt;
eine Abzweigöffnung (20) für das Abgas, die innerhalb des Abgasrohrs (3) vorgesehen ist;
einen Wärmeaustauschteil (15), der so ausgelegt ist, dass er Wärmeaustausch zwischen dem Abgas, das von der Abzweigöffnung (20) abgezweigt wird, und einem Wärmeaustauschmedium (15) durchführt;
eine Austrittsöffnung (22), die so ausgelegt ist, dass sie das Abgas, das durch den Wärmeaustauschteil (15) durchgeströmt ist, zur Außenseite des Abgasrohrs (3) entlässt;
eine Öffnungs- und Schließeinheit (9), die so ausgelegt ist, dass sie einen Auslass (7c) des Abgasrohrs (3) öffnet und schließt; und
ein Ummantelungselement (11), das so ausgelegt ist, dass es das aus dem Auslass (7c) und der Austrittsöffnung (22) entlassene Abgas zur stromabwärts gelegenen Seite führt,
wobei das Ummantelungselement (11) eine Schnittebene (25a) umfasst, die einen virtuellen Strahl (C) schneidet, der sich von einem Endteil (A) des Auslasses (7c) auf einer Seite des Austrittskanals (22) erstreckt, wobei der Endteil (A) als Ausgangspunkt dient, und der virtuelle Strahl (c) in einem Winkel von 7° in Bezug auf eine Axialrichtung (B) des Abgasrohrs (3) nach außen geneigt ist, und die Schnittebene (25a) einen Winkel von 90° bis 97° in Bezug auf den virtuellen Strahl (C) bildet,
wobei die Austrittsöffnung (22) zwischen dem Auslass (7c) und der Schnittebene (25a) in der Axialrichtung (B) positioniert ist, und
wobei sich die Austrittsöffnung (22) unterhalb einer Mitte des Auslasses (7c) befindet.

2. Abgasabwärmerückgewinnungsvorrichtung (1) nach Anspruch 1, ferner umfassend eine Trennplatte (12), die in der Austrittsöffnung (22) vorgesehen ist und einen Durchgang (29) zum Leiten des Abgases zur stromabwärts gelegenen Seite bildet.

## Revendications

1. Dispositif de récupération de chaleur d'échappement (1) comprenant :
un tuyau d'échappement (3) qui est configuré pour guider les gaz d'échappement d'un côté en amont à un côté en aval ;
un orifice de ramification (20) pour les gaz d'échappement, prévu à l'intérieur du tuyau d'échappement (3) ;
une partie d'échange de chaleur (15) qui est configurée pour réaliser l'échange de chaleur entre les gaz d'échappement ramifiés à partir de l'orifice de ramification (20) et un milieu d'échange de chaleur (15) ;
un orifice d'échappement (22) qui est configuré pour décharger les gaz d'échappement, qui sont passés par la partie d'échange de chaleur (15), à l'extérieur du tuyau d'échappement (3) ;
une unité d'ouverture et de fermeture (9) qui est configurée pour ouvrir et fermer une sortie (7c) du tuyau d'échappement (3) ; et
un élément de coque (11) qui est configuré pour guider les gaz d'échappement déchargés par la sortie (7c) et l'orifice d'échappement (22), vers le côté en aval,
dans lequel l'élément de coque (11) comprend un plan d'intersection (25a) coupant un rayon virtuel (C) qui s'étend à partir d'une partie d'extrémité (A) de la sortie (7c) sur un côté de l'orifice d'échappement (22), la partie d'extrémité (A) servant de point de départ, et le rayon virtuel (C) étant incliné vers l'extérieur à un angle de 7° par rapport à une direction axiale (B) du tuyau d'échappement (3), et le plan d'intersection (25a) forme un angle de 90° à 97° par rapport au rayon virtuel (C),
dans lequel l'orifice d'échappement (22) est positionné entre la sortie (7c) et le plan d'intersection (25a) dans la direction axiale (B), et
dans lequel l'orifice d'échappement (22) est positionnée au-dessous d'un centre de la sortie (7c).

2. Dispositif de récupération de chaleur d'échappement (1) selon la revendication 1, comprenant en outre une plaque de séparation (12) prévue dans l'orifice d'échappement (22) et formant un passage (29) pour guider les gaz d'échappement vers le côté en aval.
